# NEUE EUROPÄISCHE PATENTSCHRIFT

(11) **EP 0 968 889 B2**
(45) Veröffentlichungstag und Bekanntmachung des Hinweises auf die Entscheidung über den Einspruch: **14.06.2006**
(45) Hinweis auf die Patenterteilung: 12.03.2003
(21) Anmeldenummer: 99112049.4
(22) Anmeldetag: 22.06.1999
(51) Int. Cl.: B60R 21/20

(54) **Armaturentafel**
Instrument panel
Tableau de bord

(30) Priorität: 01.07.1998 DE 29811739 U
(43) Veröffentlichungstag der Anmeldung: 05.01.2000
(73) Patentinhaber: Delphi Technologies, Inc., Troy, MI 48007 (US)
(72) Erfinder: Kansteiner, Udo, Dipl.-Ing., 58456 Witten (DE)
(74) Vertreter: Manitz, Finsterwald & Partner GbR

(56) Entgegenhaltungen:
- EP-A- 0 648 648
- EP-A- 0 688 700
- DE-A- 4 344 523
- DE-A- 19 623 579
- US-A- 5 445 410
- US-A- 5 447 327
- US-A- 5 456 487
- US-A- 5 772 240

## Beschreibung

Die Erfindung betrifft eine Armaturentafel für Kraftfahrzeuge.

Bei der Herstellung derartiger Armaturentafeln sind sowohl gestalterische und funktionelle Gesichtspunkte zu berücksichtigen als auch geltende Sicherheilsbestimmungen einzuhalten.

Eine Armaturentafel gemäß dem Oberbegriff des Anspruchs 1 Ist aus der US-A-5,447,327 bekannt.

Weitere bekannte Amisturentafein und Abdeckungen für Luftsackanordnungen sind In der EP-A-0 648 648, US-A-5,456,487, US-A-S.445.410. US-A-5,772,240, DE-A-19 623 579, EP-A-0 688 700 und DE-A-43 44 523 offenbart.

Es ist das der Erfindung zugrundeliegende Problem (Aufgabe), eine Armaturentafel zu schaffen, die an mit Airbags ausgerüsteten Fahrzeugen verwendbar ist und ein möglichst geringes Gewicht besitzt.

Die Lösung dieser Aufgabe erfolgt durch die Merkmale des Anspruchs 1.

Durch die Integration des Luftsackdeckels in das Basisteil können die Materialstärke und das Gewicht der Armaturentafel gering gehalten werden. Die Kaschierung gestattet es, der zum Fahrgastraum weisenden Fläche des Basisteils die jeweils gewünschten Oberflächeneigenschaften zu verleihen. Des weiteren sorgt die Kaschierung dafür, daß die Konturen des Luftsackdeckels vom Fahrgastraumaus nicht sichtbar sind. Dadurch kann die erfindungsgemäße Armaturentafel auch in Fahrzeugen ohne Airbag verwendet werden, ohne daß durch vom Fahrgastraum aus sichtbare Luftsackdeckelkonturen der falsche Eindruck erweckt wird, das jeweilige Fahrzeug sei mit einem Airbag ausgestattet.

Darüber hinaus sind das Basisteil und der Luftsackdeckel an ihrer Rückseite durch wenigstens ein Strukturelement miteinander verbunden, wobei das Struktursiement zumindest einen sich etwa parallel zur Kaschierung und über den Übergang zwischen Basisteil und Luftsackdeckel hinweg erstreckenden Auflageabschnitt aufweist und zumindest bereichsweise als Schußkanal für einen sich aufblasenden Luftsack ausgebildet ist Das Strukturelement erfüllt hierbei gleichzeitig zwei Funktionen, da es sowohl für die Verbindung zwischen Basisteil und Luftsackdeckel sorgt als auch den bei Fahrzeugen mit Airbag ohnehin erforderlichen Schußkanal bereitstellt.

Gemäß der Erfindung ist der Luftsackdeckel an dem Strukturelement, vorzugsweise an einem Schußkanalabschnitt des Strukturelements verankert, insbesondere verschwenkbar angebracht. Bevorzugt ist der Luftsackdeckel mit einem Strukturelement über ein bevorzugt aus Nylon oder Metall hergestelltes Schamierelement verbunden.

Hierdurch erfüllt das Strukturelement noch eine weitere Funktion, indem es dafür sorgt, daß In einem Crashfall der durch den sich aufblasenden Luftsack weggedrückte Luftsackdeckel nicht durch das Fahrzeug geschleudert wird und die Fahrzeuginsassen nicht verletzt werden.

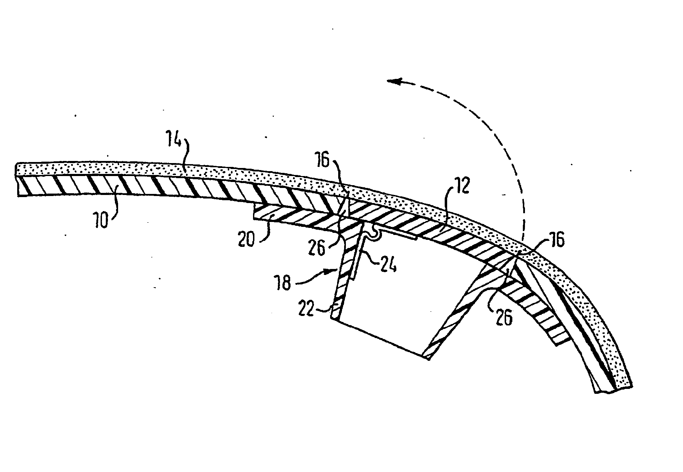

Weitere vorteilhafte Ausgestaltungen der Erfindung sind in den Unteransprüchen, der Beschreibung sowie der Zeichnung beschrieben. Die einzige Figur der Zeichnung zeigt einen Teil einer erfindungsgemäßen Armaturentafel in einer geschnittenen Seitenansicht.

Die in der Figur dargestellte erfindungsgemäße Armaturentafel umfaßt ein Basisteil 10, das aus einem Fasermaterial oder einem Insbesondere im Spritzgußverfahren verwendbaren Kunststoffmaterial hergestellt ist.

In das Basisteil 10 ist ein Luftsackdeckel 12 derart integriert, daß das Basisteil 10 und der Luftsackdeckel 12 gemeinsam eine durchgehende Fläche bilden, die im eingebauten Zustand der Armaturentafel zum Fahrgastraum - in der Figur nach oben und nach rechts - weist.

Der Luftsackdeckel 12 besteht aus einem Material besonders hoher Festigkeit, das sich vom für das Basisteil 10 verwendeten Material unterscheidet.

Die im eingebauten Zustand zum Fahrgastraum weisende, vom Basisteil 10 und vom Luftsackdeckel 12 gemeinsam gebildete Fläche ist mit einer Kaschierung 14 überzogen, die in Form eines Laminats oder einer Plattierung aufgebracht ist, aber auch hinterspritzt oder hinterpreßt sein kann.

In der dargestellten Ausführungsform ist die erfindungsgemäße Armaturentafel mit in Richtung zum Fahrgastraum zunehmendem Krümmungsradius gekrümmt ausgebildet. Die Armaturentafel kann jede beliebige andere Form aufweisen, wobei der Luftsackdeckel In für das jeweilige Fahrzeug individueller Art und Weise an der erforderlichen Stelle in das Basisteil 10 integriert ist.

Die einander zugewandten Kanten des Basisteils 10 und des Luftsackdeckels 12 sind derart abgeschrägt, daß sich im zusammengesetzten Zustand an der Rückseite der Armaturentafel offene Kanäle 26 mit von der Kaschierung 14 aus etwa V-förmig auseinanderiaufenden Seitenwänden ergeben. Die Kanäle 26 ermöglichen es, die Kaschierung 14 im auf das Basisteil 10 und den Luftsackdeckel 12 aufgebrachten Zustand von der Rückseite her mit Einschnitten 28 zu versehen, die vom Fahrgastraum aus nicht sichtbar sind.

An ihrer Rückseite sind das Basisteil 10 und der Luftsackdeckel 12 durch einen Auflageabschnitt 20 eines Strukturelements 18 miteinander verbunden, der sich etwa parallel zur Kaschierung 14 und über den Übergang zwischen Basisteil 10 und Luftsackdeckel 12, d. h. über die Kanäle 26 hinweg erstrecken.

Etwa senkrecht zum Auflageabschnitt 20 des Strukturelements 18 erstreckt sich ein einstückig mit dem Auflageabschnitt 20 ausgebildeter, rahmenartiger Schußkanalabschnitt 22, der In einer etwa parallel zur Kaschierung 14 verlaufenden Ebene einen quadratischen oder rechteckigen Querschnitt aufweist und auf diese Weise einen Schußkanal für einen sich aufblasenden Luftsack bildet.

Der Luftsackdeckel 12 ist am Schußkanalabschnitt 22 des Strukturelements 18 mittels eines bevorzugt aus Nylon oder Metall hergestellten Schamierelements 24 verankert, das am Schußkanalabschnitt 22 und am Luftsackdeckel 12 befestigt ist. Anstelle eines derartigen Schamierelements können auch andere Verankerungsmittel vorgesehen sein. Aftemativ kann der Luftsackdeckel 12 auch einstückig mit dem Schußkanalabschnitt 22 ausgebildet und mit diesem z. B. über einen Scharnierbereich reduzierter Materialstärke verbunden sein.

Wenn im Crashfall der Luftsack aufgeblasen wird, sich entlang des durch den Schußkanalabschnitt 22 des Strukturelements 18 gebildeten Schußkanals 22 ausbreitet und gegen den Luftsackdeckel 12 drückt, wird die Kaschierung 14 an den Einschnitten 28 nach Art von Sollbruchstellen aufgerissen. Der Luftsackdeckel 12 kann sich dann öffnen und wird aufgrund seiner Verankerung am Strukturelement 18 mittels des Scharnierelements 24 in Richtung der Windschutzscheibe des Fahrzeugs aufgeschwenkt, wobei das vom Scharnierelement 24 entfernte Ende des Luftsackdeckels 12 sich auf einer durch den gestrichelt gezeichneten Pfeil angedeuteten Bahn bewegt. Das Schamierelement 24 verhindert somit, daß der Luftsackdeckel 12 durch den Fahrzeuginnenraum geschleudert wird.

Das Vorsehen eines hochfesten Materials für den Luftsackdeckel 12 verhindert, daß dieser beim Öffnen durch den Luftsack zerbricht oder zersplittert. Außerdem kann das Basisteil 10 aus einem Material von geringerer Festigkeit und damit einem preisgünstigeren Material hergestellt werden, da es vergleichsweise geringe Kräfte aufnehmen muß und zudem durch das Strukturelement 18 verstärkt ist.

Eine bevorzugte Materialkombination der einzelnen Bauteile der erfindungsgemäßen Armaturentafel umfaßt bevorzugt Materialien, die einer Polypropylen (PP)-Materialfamilie angehören.

Vorzugsweise werden folgende Materialien verwendet:
- Basisteil (10): PP mit geringen Beimischungen von Talkum und EPDM,
- Luftsackdeckel (12): hochfestes Spritzgußmaterial aus TPO,
- Kaschierung (14): Schaumrückenfolie aus TPO,
- Strukturelement (18): hochfestes Spritzgußmaterial aus TPO.

### Bezugszeichenliste

- 10: Basisteil
- 12: Luftsackdeckel
- 14: Kaschierung
- 16: Einschnitte
- 18: Strukturelement
- 20: Auflageabschnitt
- 22: Schußkanalabschnitt
- 24: Scharnierelement
- 26: Kanäle

## Patentansprüche

1. Armaturentafel für Kraftfahrzeuge mit einem Basisteil (10) und einem in das Basisteil (10) integrierten, durch einen sich aufblasenden Luftsack beaufschlagbaren Luftsackdeckel (12), wobei die vom Basisteil (10) und vom Luftsackdeckel (12) gebildete, im eingebauten Zustand zum Fahrgastraum weisende Fläche mit einer Kaschierung (14) überzogen ist,
**dadurch gekennzeichnet,**
**daß** das Basisteil (10) und der Luftsackdeckel (12) an ihrer Rückseite durch wenigstens ein Strukturelement (18) miteinander verbunden sind, wobei das Strukturelement (18) zumindest einen sich etwa parallel zur Kaschierung (14) und über den Übergang zwischen Basisteil (10) und Luftsackdeckel (12) hinweg erstreckenden Auflageabschnitt (20) aufweist und zumindest bereichsweise als Schußkanal für einen sich aufblasenden Luftsack ausgebildet ist, daß der Luftsackdeckel (12) aus einem Material hergestellt ist, das eine höhere Festigkeit als das Material des Basisteils (10) aufweist, und
**daß** der Luftsackdeckel (12) an dem Strukturelement (18) verankert ist.

2. Armaturentafel nach Anspruch 1,
**dadurch gekennzeichnet,**
**daß** ein Schusskanalabschnitt (22) des Strukturelements (18) im Bereich des Übergangs zwischen Basisteil und Luftsackdeckel angeordnet ist und sich etwa senkrecht zur Kaschierung (14) erstreckt.

3. Armaturentafel nach Anspruch 2,
**dadurch gekennzeichnet,**
**daß** der Auflageabschnitt (20) und der Schusskanalabschnitt (22) miteinander verbunden sind.

4. Armaturentafel nach Anspruch 3,
**dadurch gekennzeichnet,**
**daß** der Auflageabschnitt (20) und der Schusskanalabschnitt (22) einstückig miteinander ausgebildet sind.

5. Armaturentafel nach einem der vorhergehenden Ansprüche,
**dadurch gekennzeichnet,**
**daß** der Luftsackdeckel (12) an einem Schusskanalabschnitt (22) des Strukturelements (18) verankert und insbesondere verschwenkbar angebracht ist.

6. Armaturentafel nach einem der vorhergehenden Ansprüche,
**dadurch gekennzeichnet,**
**daß** der Luftsackdeckel (12) mit dem Strukturelement (18) über ein bevorzugt aus Nylon oder Metall hergestelltes Scharnierelement (24) verbunden ist.

7. Armaturentafel nach einem der vorhergehenden Ansprüche,
**dadurch gekennzeichnet,**
**daß** für das Basisteil (10) ein Fasermaterial oder ein, insbesondere im Spritzgußverfahren verwendbares, Kunststoffmaterial vorgesehen ist.

8. Armaturentafel nach einem der vorhergehenden Ansprüche,
**dadurch gekennzeichnet,**
**daß** die Kaschierung (14) in Form eines Laminats oder einer Plattierung vorgesehen ist.

9. Armaturentafel nach einem der vorhergehenden Ansprüche,
**dadurch gekennzeichnet,**
**daß** die Kaschierung (14), bevorzugt im Bereich des Übergangs zwischen Basisteil (10) und Luftsackdeckel (12), eingeschnitten ist.

10. Armaturentafel nach Anspruch 9,
**dadurch gekennzeichnet,**
**daß** die Einschnitte (16) an der Rückseite der Kaschierung (14) vorgesehen und im eingebauten Zustand vom Fahrgastraum aus unsichtbar sind.

## Claims

1. Instrument panel for motor vehicles with a base part (10) and an airbag cover (12) integrated into the base part (10) and able to be impacted by an inflating airbag, wherein the face formed by the base part (10) and the airbag cover (12) and pointing towards the passenger space in the assembled state is clad with a cladding (14), **characterised in that** the base part (10) and the airbag cover (12) are connected to one another at the back by at least one structural element (18), wherein the structural element (18) has at least one support section (20) extending approximately parallel to the lining (14) and beyond the transition between the base part (10) and the airbag cover (12 and is constructed at least partially as a firing channel for an inflating airbag; **in that** the airbag cover (12) is made of a material having a higher strength than the material of the base part (10); and **in that** the airbag cover (12) is anchored to the structural element (18).

2. Instrument panel according to claim 1, **characterised in that** a firing channel section (22) of the structural element (18) is arranged in the region of the transition between base part and airbag cover and extends approximately perpendicular to the cladding (14).

3. Instrument panel according to claim 2, **characterised in that** the support section (20) and the firing channel section (22) are connected to one another.

4. Instrument panel according to claim 3, **characterised in that** the support section (20) and the firing channel section (22) are constructed in one piece with one another.

5. Instrument panel according to one of the preceding claims, **characterised in that** the airbag cover (12) is anchored, and in particular pivotably attached, to a firing channel section of the structural element (18).

6. Instrument panel according to one of the preceding claims, **characterised in that** the airbag cover (12) is connected to the structural element (18) via a hinge element (24), preferably made of nylon or metal.

7. Instrument panel according to one of the preceding claims, **characterised in that** a fibrous material or a plastic material, in particular able to be used in the injection moulding method, is provided for the base part (10).

8. Instrument panel according to one of the preceding claims, **characterised in** the cladding (14) is provided in the form of a laminate or plating.

9. Instrument panel according to one of the preceding claims, **characterised in that** the cladding (14) is preferably notched in the region of the transition between base part (10) and airbag cover (12).

10. Instrument panel according to claim 9, **characterised in that** the notches (16) are provided at the back of the cladding (14) and are invisible from the passenger compartment in the assembled state.

## Revendications

1. Tableau de bord pour véhicules automobiles, comprenant un élément de base (10) et un couvercle (12) de coussin gonflable, intégré dans l'élément de base (10) et pouvant être soumis à l'action d'un coussin gonflable lorsque celui-ci se gonfle, la surface formée par l'élément de base (10) et par le couvercle (12) de coussin gonflable, tournée vers l'habitacle à l'état installé de ceux-ci, étant recouverte par un placage (14),
**caractérisé en ce que** l'élément de base (10) et le couvercle (12) de coussin gonflable sont reliés l'un à l'autre, à leur face arrière, par l'intermédiaire d'au moins un élément de structure (18), l'élément de structure (18) comprenant au moins une portion d'appui (20) s'étendant à peu près parallèlement au placage (14) et par-dessus le joint entre l'élément de base (10) et le couvercle (12) de coussin gonflable, et étant façonné au moins partiellement comme un canal de tir pour un coussin gonflable qui se gonfle,
que le couvercle (12) de coussin gonflable est réalisé en une matière qui présente une résistance supérieure à celle de la matière de l'élément de base (10), et
que le couvercle (12) de coussin gonflable est ancré sur l'élément de structure (18).

2. Tableau de bord selon la revendication 1, **caractérisé en ce qu'**un tronçon (22) de canal de tir de l'élément de structure (18) est disposé au niveau du joint entre l'élément de base et le couvercle de coussin gonflable, et s'étend à peu près perpendiculairement au placage (14).

3. Tableau de bord selon la revendication 2, **caractérisé en ce que** la portion (20) d'appui et le tronçon (22) de canal de tir sont reliés l'un à l'autre.

4. Tableau de bord selon la revendication 3, **caractérisé en ce que** la portion d'appui (20) et le tronçon (22) de canal de tir sont fabriqués d'une seule pièce.

5. Tableau de bord selon l'une des revendications précédentes, **caractérisé en ce que** le couvercle (12) du coussin gonflable est ancré sur un tronçon de canal de tir (22) de l'élément de structure (18) et y est notamment monté de façon pivotante.

6. Tableau de bord selon l'une des revendications précédentes, **caractérisé en ce que** le couvercle (12) de coussin gonflable est relié à l'élément de structure (18) par l'intermédiaire d'un élément charnière (24) de préférence réalisé en nylon ou en métal.

7. Tableau de bord selon l'une des revendications précédentes, **caractérisé en ce que** l'élément de base (10) est prévu en une matière à fibres ou en une matière plastique pouvant notamment être moulée par injection.

8. Tableau de bord selon l'une des revendications précédentes, **caractérisé en ce que** le placage (14) est exécuté sous forme d'un stratifié ou d'un plaqué.

9. Tableau de bord selon l'une des revendications précédentes, **caractérisé en ce que** le placage (14) est de préférence prédécoupé notamment dans la zone du joint entre l'élément de base (10) et le couvercle (12) du coussin gonflable.

10. Tableau de bord selon la revendication 9, **caractérisé en ce que** les traits de coupe (16) sont prévus dans la face arrière du placage (14) et sont invisibles depuis l'habitacle, à l'état installé.
